# EUROPEAN PATENT APPLICATION

(11) **EP 3 767 441 A1**
(43) Date of publication of application: **20.01.2021**
(21) Application number: 19768421.0
(22) Date of filing: 29.01.2019
(51) Int. Cl.: G06F 3/041, B32B 3/18, B32B 7/022

(54) **TOUCH SENSOR**

(30) Priority: 13.03.2018 JP 2018045199
(71) Applicant: Panasonic Intellectual Property Management Co., Ltd., Osaka-shi, Osaka 540-6207 (JP)
(72) Inventor: MURATA, Keishiro, Osaka-shi, Osaka 540-6207 (JP); TOMOIDA, Ryo, Osaka-shi, Osaka 540-6207 (JP); TORIYAMA, Shinji, Osaka-shi, Osaka 540-6207 (JP); FUKUI, Masakazu, Osaka-shi, Osaka 540-6207 (JP)
(74) Representative: Vigand, Philippe
(86) International application number: PCT/JP2019/002825
(87) International publication number: WO 2019/176340

(57) **Abstract**

A touch sensor according to the present disclosure includes: a substrate part including a first surface and a second surface located opposite to the first surface; a first hard coat layer which is provided on the first surface of the substrate part and is light-transmissive; and a decorative part including a first decorative layer which is provided on the first surface of the substrate part and is tinted and less light-transmissive than the first hard coat layer. The first decorative layer includes: a first decorative surface in contact with the first surface of the substrate part; and a second decorative surface connected to the first decorative surface. The first hard coat layer includes: a first coat surface in contact with the first surface of the substrate part; and a second coat surface connected to the first coat surface and facing the second decorative surface.

## Description

### TECHNICAL FIELD

The present disclosure relates to touch sensors.

### BACKGROUND ART

For touch sensors, Patent Literature (PTL) 1 is conventionally known, for example.

PTL 1 discloses a touch sensor including: a transparent substrate; a sensor electrode and an outer peripheral wire formed on at least a surface of the transparent substrate; a decorative part formed above the surface of the transparent substrate so as to cover, from above, the outer peripheral wire located on the surface of the transparent substrate; and a cover glass made of tempered glass.

### Citation List

### Patent Literature

PTL 1: Unexamined Japanese Patent Publication No. 2015-064707

### SUMMARY OF THE INVENTION

A touch sensor according to one aspect of the present disclosure includes: a substrate part including a first surface and a second surface located opposite to the first surface; a first hard coat layer which is provided on the first surface of the substrate part and is light-transmissive; and a decorative part including a first decorative layer which is provided on the first surface of the substrate part and is tinted and less light-transmissive than the first hard coat layer. The first decorative layer includes: a first decorative surface in contact with the first surface of the substrate part; and a second decorative surface connected to the first decorative surface. The first hard coat layer includes: a first coat surface in contact with the first surface of the substrate part; and a second coat surface connected to the first coat surface and facing the second decorative surface.

With the touch sensor according to the present disclosure, it is possible to provide a thin touch sensor.

### BRIEF DESCRIPTION OF THE DRAWINGS

FIG. 1 is an overall perspective view of a touch sensor according to an exemplary embodiment of the present disclosure.
FIG. 2 is a cross-sectional view taken along line II-II in FIG. 1.
FIG. 3 is an exploded cross-sectional view of the touch sensor illustrated in FIG. 2, presenting separate illustrations of structural elements of the touch sensor.

### DESCRIPTION OF EMBODIMENTS

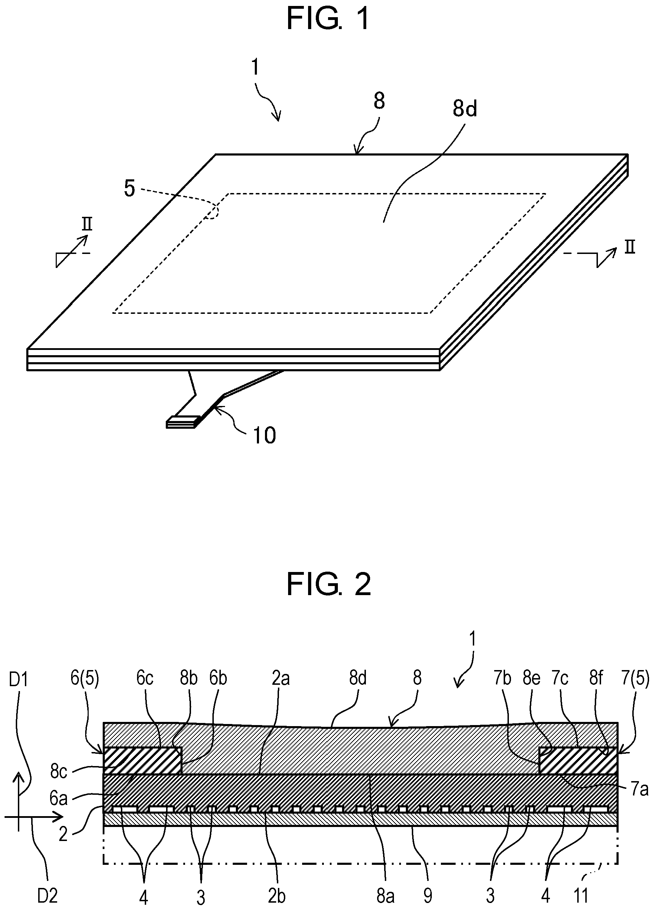

In the aforementioned conventional touch sensor, the cover glass is formed having a thickness greater than the thickness of the substrate. Furthermore, the cover glass is stacked and placed above the transparent substrate and the decorative part via an optical adhesive having a predetermined thickness (refer to FIG. 2 and paragraph [0043] in PTL 1). Thus, an increase in the overall thickness of the touch sensor due to the thickness of each of the cover glass and the optical adhesive is problematic. This means that it is difficult to reduce the thickness of the touch sensor disclosed in document 1. With the touch sensor according to the present disclosure, the thickness reduction is possible.

### EXEMPLARY EMBODIMENT

Hereinafter, an exemplary embodiment of the present disclosure will be described in detail with reference to the drawings. The following description of the exemplary embodiment is essentially a mere example and is not intended to limit the present disclosure, the applicable range thereof, or the usage thereof.

FIG. 1 illustrates the entirety of touch sensor 1 according to an exemplary embodiment of the present disclosure. Touch sensor 1 is a sensor-type input device on which a touch operation is possible. Touch sensor 1 is used as an input device for an external device not illustrated in the drawings (for example, an in-vehicle device such as a car navigation system, a display device for a personal computer, a mobile phone, a personal digital assistant, a portable game console, a photocopier, a ticket vending machine, or an automated teller machine). As illustrated in FIG. 1, flexible wiring board 10 to be used for electrical connection to this external device is provided on touch sensor 1.

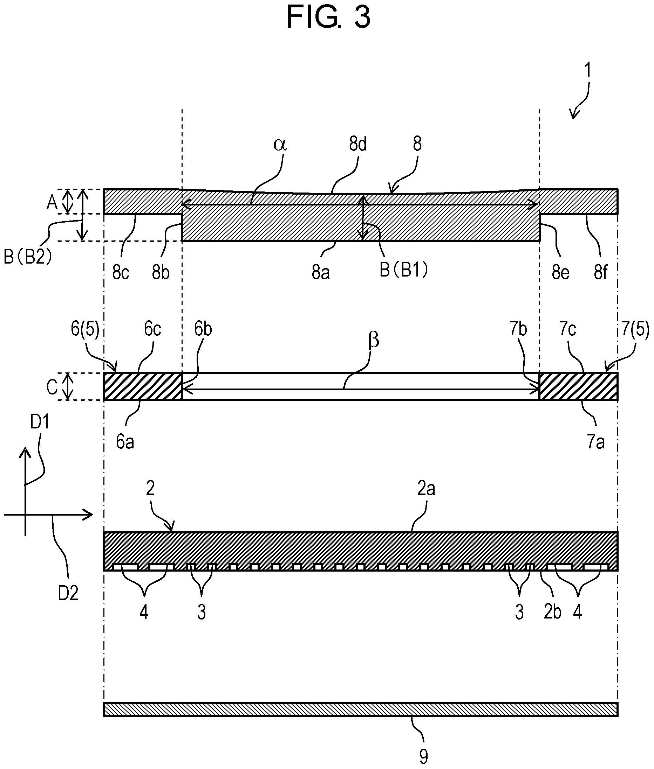

Note that in the following description, the direction from second surface 2b to first surface 2a of substrate part 2 to be described later with reference to FIG. 3 is denoted as first direction D1, and the direction orthogonal to first direction D1 is denoted as second direction D2 (refer to the arrows illustrated in FIG. 2 and FIG. 3). Hereinafter, viewing in the first direction is described as "plan view". The positional relationship of touch sensor 1 and structural elements to be described later is specified primarily on the basis of first direction D1 and second direction D2. However, such positional relationship is irrelevant to the actual direction in touch sensor 1 or a device in which touch sensor 1 is embedded.

### [Configuration of Substrate Part 2]

As illustrated in FIG. 2 and FIG. 3, touch sensor 1 includes substrate part 2 which is transparent. Substrate part 2 contains, for example, glass or a light-transmissive resin material such as polycarbonate, polyethylene terephthalate, polyethersulfone, poly (methyl methacrylate) (PMMA) (acryl), and a cycloolefin polymer (COP).

Substrate part 2 is formed to be, for example, rectangular in plan view and has a thickness of approximately 1 mm to 3 mm. Substrate part 2 has first surface 2a and second surface 2b located opposite to first surface 2a. Although the present exemplary embodiment assumes that first surface 2a is located on the side visually recognized (operated) by a user, for example, while second surface 2b is located on the side on which a display is disposed, the positional relationship is not limited to this example.

### [Configuration of Sensor Electrode 3]

Sensor electrodes 3, 3, ..., are provided on second surface 2b of substrate part 2. Sensor electrodes 3, 3, ..., are configured, for example, as a electrostatic capacitive sensor unit capable of sensing a touch operation using a finger (sensing target) of a user that has touched fourth coat surface 8d of first hard coat layer 8 to be described later. Each sensor electrode 3 is electrically connected to the aforementioned external device via lead wires 4, 4, ..., to be described later, and flexible wiring board 10 described above.

Sensor electrodes 3, 3 are configured to have a grid structure in which a plurality of thin electrically conductive lines are arranged in a mesh pattern, for example. This grid structure is configured as an electrically conductive layer in which an electrically conductive metal to be described later is embedded in a plurality of grooves formed in second surface 2b of substrate part 2.

The material of each sensor electrode 3 is preferably, for example, an electrically conductive metal such as silver, copper, aluminum, nickel, molybdenum, and an alloy of copper and nickel, but may be an electrically conductive resin material or the like. The line width of each sensor electrode 3 is preferably, for example, about 2 µm. Examples of the method for forming each sensor electrode 3 include sputter deposition, plating, photolithography, stencil printing, and chemical-mechanical polishing (CMP) (embedding).

### [Configuration of Lead Wire 4]

Lead wires 4, 4, ...., to be used for electrical connection to the aforementioned external circuit via flexible wiring board 10 is provided on second surface 2b of substrate part 2. The line width of each lead wire 4 is preferably, for example, about 6 µm. Each lead wire 4 has one end portion electrically connected to sensor electrode 3 and the other end portion electrically connected to flexible wiring board 10. Note that each lead wire 4 is made from substantially the same material as that of sensor electrode 3 and is formed by substantially the same method as the method by which sensor electrode 3 is formed.

As illustrated in FIG. 2, light source body 11 for emitting light to sensor electrodes 3, 3, ..., is provided below substrate part 2. Light source body 11 is installed under substrate part 2. A liquid-crystal display (LCD), a light-emitting diode (LED), or the like is suitable as light source body 11.

### [Configuration of Decorative Part 5]

As illustrated in FIG. 1, touch sensor 1 includes decorative part 5. Decorative part 5 allows lead wires 4, 4, ..., to be hidden from the visually recognizable side of touch sensor 1 (refer to FIG. 2 and FIG. 3). In this exemplary embodiment, decorative part 5 is formed into the shape of an approximate frame so as to fit with the entire peripheral edge of touch sensor 1 in plan view.

Decorative part 5 is made from a resin material that contains a color pigment leading to a blackish color, for example. Decorative part 5 is formed on first surface 2a of substrate part 2 by coating, printing, or the like. In other words, decorative part 5 is disposed on a surface of substrate part 2 that is located on the visually recognizable side of touch sensor 1. Note that decorative part 5 is preferably formed to have a thickness of 10 µm to 15 µm, for example.

As illustrated in FIG. 2 and FIG. 3, decorative part 5 includes first decorative layer 6 and second decorative layer 7.

First decorative layer 6 includes first decorative surface 6a which contacts first surface 2a of substrate part 2. First decorative surface 6a is formed along second direction D2.

First decorative layer 6 includes second decorative surface 6b connected to first decorative surface 6a. Second decorative surface 6b is formed along first direction D1.

First decorative layer 6 includes third decorative surface 6c connected to first decorative surface 6a via second decorative surface 6b. Third decorative surface 6c is located further away in first direction D1 than first decorative surface 6a is, and is formed along second direction D2.

Second decorative layer 7 includes fourth decorative surface 7a which contacts first surface 2a of substrate part 2. Fourth decorative surface 7a is formed along second direction D2.

Second decorative layer 7 includes fifth decorative surface 7b connected to fourth decorative surface 7a and facing second decorative surface 6b. Fifth decorative surface 7b is formed along first direction D1.

Second decorative layer 7 includes sixth decorative surface 7c connected to fourth decorative surface 7a via fifth decorative surface 7b. Sixth decorative surface 7c is located further away in first direction D1 than fourth decorative surface 7a is, and is formed along second direction D2.

### [Configuration of First Hard Coat Layer 8]

As illustrated in FIG. 1, touch sensor 1 includes first hard coat layer 8 which is light-transmissive. As illustrated in FIG. 2 and FIG. 3, first hard coat layer 8 is formed on first surface 2a of substrate part 2 by coating or printing.

First hard coat layer 8 is made from a transparent ultraviolet curable or thermosensitive resin material. Specifically, for example, acrylate, methacrylate, or the like is suitable as the material of first hard coat layer 8. Particularly, a multifunctional acrylic ester and a multifunctional methacrylic ester such as a multifunctional acrylate and a multifunctional methacrylate are suitable. It is preferable that first hard coat layer 8 become harder than the substrate. Specifically, the degree of hardness of first hard coat layer 8 is preferably in the range of B to 9H. Specific properties of first hard coat layer 8 will be described later.

As illustrated in FIG. 2 and FIG. 3, first hard coat layer 8 includes first to sixth coat surfaces 8a to 8f.

First coat surface 8a is formed along second direction D2. First coat surface 8a is in contact with first surface 2a of substrate part 2.

Second coat surface 8b is connected to first coat surface 8a. Second coat surface 8b is formed along first direction D1. Second coat surface 8b is in face-to-face contact with second decorative surface 6b in second direction D2.

Third coat surface 8c is connected to second coat surface 8b. Third coat surface 8c is formed along second direction D2. Third coat surface 8c is in face-to-face contact with third decorative surface 6c in first direction D1.

Fourth coat surface 8d is located further away in first direction D1 than first coat surface 8a and third coat surface 8c are. Fourth coat surface 8d is formed along second direction D2.

Fifth coat surface 8e is connected to first coat surface 8a. Fifth coat surface 8e is formed along first direction D1. Fifth coat surface 8e is in face-to-face contact with fifth decorative surface 7b in second direction D2.

Sixth coat surface 8f is connected to fifth coat surface 8e. Sixth coat surface 8f is formed along second direction D2. Sixth coat surface 8f is in face-to-face contact with sixth decorative surface 7c in first direction D1.

As illustrated in FIG. 3, when viewed in first direction D1, the distance between third coat surface 8c and fourth coat surface 8d is denoted as dimension A, the distance between first coat surface 8a and fourth coat surface 8d is denoted as dimension B, and the distance between first decorative surface 6a and third decorative surface 6c is denoted as dimension C. A region (first region) located between second decorative surface 6b and fifth decorative surface 7b is denoted as area β. A region (second region) located in first direction D1 from at least area β is denoted as area a.

First hard coat layer 8 is configured so that when viewed in first direction D1, the distance (dimension A) between third coat surface 8c and fourth coat surface 8d is smaller than the distance (dimension C) between first decorative surface 6a and third decorative surface 6c.

Furthermore, first hard coat layer 8 includes, in area a, a portion where the distance (dimension B) between first coat surface 8a and fourth coat surface 8d in first direction D1 is smaller than a distance (total dimension of dimension A and dimension C) obtained by adding the distance (dimension A) between third coat surface 8c and fourth coat surface 8d in first direction D1 to the distance (dimension C) between first decorative surface 6a and third decorative surface 6c in first direction D1.

In other words, as illustrated in FIG. 3, the distance (dimension B1) between first coat surface 8a and fourth coat surface 8d in a region (area α) overlapping area β in direction D1 is smaller than the distance (dimension B2) between first coat surface 8a and fourth coat surface 8d in a region at the perimeter of area α.

### [Specific Properties of First Hard Coat Layer 8]

First hard coat layer 8 in at least area α is preferably formed so that fourth coat surface 8d has a degree of surface roughness of between 0.05 pm and 1.1 µm, inclusive. Note that examples of the method for achieving such a degree of surface roughness include polishing and other known chemical methods.

Furthermore, first hard coat layer 8 is preferably formed so that dimension B is greater than dimension C. Specifically, dimension B (that is, the thickness of first hard coat layer 8) is preferably between 18 µm and 32 µm, inclusive. In addition, the refractive index of substrate part 2 is preferably set to 1.58 to 1.6 and the refractive index of first hard coat layer 8 is preferably set to 1.51 to 1.52. With this, the difference in refractive index between substrate part 2 and first hard coat layer 8 is 0.1 or less. As a result, the light transmissivity of touch sensor 1 is secured, and the top surface of touch sensor 1 can be free from the appearance of a rainbow pattern.

Furthermore, a mixture obtained by blending a multifunctional acrylic ester, a multifunctional methacrylic ester, or the like, as a primary agent, with a photopolymerization initiator (alkylphenone-based photopolymerization initiator), for example, may be used for first hard coat layer 8. Specifically, an unreacted photopolymerization initiator is 0.43 wt% or less (upon preparation, 1.3 wt% to 2.17 wt% with a degree of polymerization of 80% or more), and the thickness ratio of the top and the bottom is 0.75 to 1.5. With this, it is possible to reduce vertical warping of touch sensor 1.

### [Second Hard Coat Layer 9]

Touch sensor 1 includes second hard coat layer 9 which is light-transmissive. Similarly to first hard coat layer 8, second hard coat layer 9 is made from a transparent ultraviolet curable or thermosensitive resin material. Second hard coat layer 9 is formed on second surface 2b of substrate part 2. Specifically, second hard coat layer 9 is formed by applying or printing the aforementioned resin material onto second surface 2b. Furthermore, similarly to first hard coat layer 8, second hard coat layer 9 is configured to have a degree of hardness in the range of B to 9H.

In the present exemplary embodiment, similarly to first hard coat layer 8, second hard coat layer 9 is formed to have a degree of surface roughness of between 0.05 pm and 1.1 µm, inclusive. Furthermore, a mixture obtained by blending a multifunctional acrylic ester, a multifunctional methacrylic ester, or the like, as a primary agent, with a photopolymerization initiator (alkylphenone-based photopolymerization initiator), for example, may be used for second hard coat layer 9.

### [Effects of Exemplary Embodiment]

As described above, in touch sensor 1, first hard coat layer 8 includes: first coat surface 8a which contacts substrate part 2; and second coat surface 8b connected to first coat surface 8a and facing second decorative surface 6b. First coat surface 8a and second coat surface 8b make it possible to dispose first hard coat layer 8 along both substrate part 2 and second decorative surface 6b. This eliminates the need for members such as cover glass and an adhesive that cause an increase in the overall thickness, which is seen in the conventional touch sensor. In other words, with touch sensor 1, it is possible to reduce the overall thickness. Thus, according to the exemplary embodiment of the present disclosure, thin touch sensor 1 can be provided.

Furthermore, since first coat surface 8a is in contact with first surface 2a of substrate part 2, first coat surface 8a can be brought into close contact with first surface 2a without gaps. With this, it is possible to improve the adhesion between substrate part 2 and first hard coat layer 8.

Furthermore, first hard coat layer 8 is configured so that second coat surface 8b contacts second decorative surface 6b. In other words, second coat surface 8b can be brought into close contact with second decorative surface 6b without gaps. With this, it is possible to improve the adhesion between first decorative layer 6 and first hard coat layer 8.

Furthermore, first hard coat layer 8 includes third coat surface 8c connected to second coat surface 8b and contacting third decorative surface 6c. With this, third coat surface 8c can be brought into close contact with third decorative surface 6c without gaps. In other words, it is possible to further improve the adhesion between first decorative layer 6 and first hard coat layer 8.

Furthermore, first hard coat layer 8 includes fourth coat surface 8d which is located further away in first direction D1 than first coat surface 8a and third coat surface 8c are. With fourth coat surface 8d, it is possible to properly protect first decorative layer 6 from the outside (for example, the visually recognizable side) of touch sensor 1. Moreover, in touch sensor 1, since the cover glass and the adhesive that are required in the conventional touch sensor are no longer needed, the number of interfaces between fourth coat surface 8d and first decorative layer 6 is smaller than that in the conventional touch sensor. In other words, at the portion where fourth coat surface 8d is located, there are only the interface between fourth coat surface 8d and an air space and the interface between fourth coat surface 8d and first decorative layer 6. Therefore, it is possible to reduce diffuse reflection of external light at the portion where first decorative layer 6 is located, reducing the phenomenon in which blurring occurs when viewed from the outside (for example, the visually recognizable side) of touch sensor 1 (the phenomenon of whitish appearance). Furthermore, the distance (dimension A in FIG. 3) between third coat surface 8c and fourth coat surface 8d in first direction D1 is smaller than the distance (dimension C in FIG. 3) between first decorative surface 6a and third decorative surface 6c in first direction D1. Thus, it is possible to properly protect first decorative layer 6 by fourth coat surface 8d while reducing the overall thickness of touch sensor 1.

Furthermore, first hard coat layer 8 includes: fifth coat surface 8e connected to first coat surface 8a and contacting fifth decorative surface 7b; and sixth coat surface 8f connected to fifth coat surface 8e and contacting sixth decorative surface 7c. With this, fifth coat surface 8e can be brought into close contact with fifth decorative surface 7b without gaps, and sixth coat surface 8f can be brought into close contact with sixth decorative surface 7c without gaps. Thus, it is possible to improve the adhesion between second decorative layer 7 and first hard coat layer 8 by fifth coat surface 8e and sixth coat surface 8f.

The degree of hardness of first hard coat layer 8 is in the range of B to 9H. With this, it is possible to improve the strength of touch sensor 1 on the visually recognizable side, for example.

In area α located in first direction D1 from at least the region (area β) located between second decorative surface 6b and fifth decorative surface 7b, fourth coat surface 8d has a degree of surface roughness of between 0.05 pm and 1.1 µm, inclusive. With this, it is possible to keep the luster of fourth coat surface 8d located in at least area α and also possible to properly prevent reflection on first hard coat layer 8 that is due to external light.

Furthermore, first hard coat layer 8 includes, at a position (area α) corresponding to the region (area β) located between second decorative surface 6b and fifth decorative surface 7b, a portion where the distance (dimension B) between first coat surface 8a and fourth coat surface 8d in first direction D1 is smaller than a distance (total dimension of dimension A and dimension C) obtained by adding the distance (dimension A) between third coat surface 8c and fourth coat surface 8d in first direction D1 to the distance (dimension C) between first decorative surface 6a and third decorative surface 6c in first direction D1. With this, it is possible to further reduce the thickness of touch sensor 1 at the position corresponding to at least area α.

The degree of hardness of second hard coat layer 9 is in the range of B to 9H. With this, it is possible to improve the strength of touch sensor 1 on the side opposite to the visually recognizable side, for example.

In the present exemplary embodiment, the degree of hardness of second hard coat layer 9 is equal to the degree of hardness of first hard coat layer 8. Thus, the strength of touch sensor 1 on both the visually recognizable side and the side opposite thereto can be made uniform.

### [Variation 1 of Exemplary Embodiment]

In first hard coat layer 8 in the above exemplary embodiment, fourth coat surface 8d located in at least area α is described as having a degree of surface roughness of between 0.05 pm and 1.1 µm, inclusive, but this exemplary embodiment is not limiting. For example, as Variation 1, anti-glare treatment may be applied so that the degree of surface roughness of fourth coat surface 8d located in at least area α is greater than 1.1 pm but less than or equal to 4.5 pm.

In Variation 1, as compared to the above-described first exemplary embodiment, fourth coat surface 8d located in at least area α has high roughness, and thus external light is more likely to be diffused on fourth coat surface 8d located in at least area α. Therefore, reflection on first hard coat layer 8 that is due to external light is reduced, and touch sensor 1 exhibits an improved anti-glare function. In other words, it is possible to improve the visibility of touch sensor 1. Note that the roughness of a surface of second hard coat layer 9 that is located opposite to first direction D1 may also be set to be greater than 1.1 pm but less than or equal to 4.5 pm.

### [Variation 2 of Exemplary Embodiment]

Furthermore, a textured microstructure (so-called a moth-eye structure) having microscopically irregular shapes not illustrated in the drawings may be added to fourth coat surface 8d located in at least area α in Variation 1 described above. Specifically, these microscopically irregular shapes are formed so that the peak-to-peak pitch of adjacent projections is less than the wavelength of visible light (380 nm to 780 nm). This enables touch sensor 1 to exhibit good anti-reflection effects for light in the wavelength range of visible light. Note that the moth-eye structure may also be added to a surface of second hard coat layer 9 that is located opposite to first direction D1.

### [Other Exemplary Embodiments]

In the above-described exemplary embodiment, flat substrate part 2 is used, but the exemplary embodiment is not limiting. For example, substrate part 2 in the form of a case may be used.

Furthermore, substrate part 2 described in the above exemplary embodiment is one sheet of a substrate member, but the exemplary embodiment is not limiting. Specifically, substrate part 2 may be formed as a laminate in which a plurality of substrate members are superimposed on each other. Alternatively, substrate part 2 may be formed as a complex laminate in which one or more substrate members and a film member are superimposed on each other. Note that in the case where substrate part 2 is a complex laminate, it is sufficient that first surface 2a be formed as the top surface of the complex laminate and second surface 2b be formed as the bottom surface of the complex laminate.

Furthermore, in the above exemplary embodiment, decorative part 5 is described as being formed into the shape of an approximate frame so as to fit with the entire peripheral edge of touch sensor 1, but the exemplary embodiment is not limiting; various shapes are available. For example, in another exemplary embodiment, decorative part 5 may be disposed only at positions corresponding to opposite sides of the peripheral edge of touch sensor 1 (in other words, decorative part 5 may include first decorative layer 6 and second decorative layer 7 only). In yet another exemplary embodiment, decorative part 5 may be disposed only on one side of the peripheral edge of touch sensor 1 (in other words, decorative part 5 may include only one of first decorative layer 6 and second decorative layer 7).

Furthermore, in the above exemplary embodiment, second hard coat layer 9 is described as being configured to have a degree of hardness in the range of B to 9H, in other words, second hard coat layer 9 is described as having the same degree of hardness as first hard coat layer 8, but the exemplary embodiment is not limiting. For example, second hard coat layer 9 may be configured to have a degree of hardness that is higher than the degree of hardness of first hard coat layer 8. In this configuration, second hard coat layer 9 can be thin.

Furthermore, in the above exemplary embodiment, sensor electrodes 3 and lead wires 4 are described as being configured as electrically conductive layers in which the electrically conductive metal is embedded in the plurality of grooves formed in second surface 2b of substrate part 2, but the exemplary embodiment is not limiting. Specifically, the plurality of grooves may be eliminated, and sensor electrodes 3 and lead wires 4 may be stacked on second surface 2b of substrate part 2. In this case, not only the aforementioned electrically conductive metal, the aforementioned electrically conductive resin material, or the like, but also a light-transmissive transparent material (transparent electrically conductive film) such as an indium tin oxide and a tin oxide may be used as the material of each of sensor electrodes 3 and lead wires 4.

Furthermore, in the above exemplary embodiment, sensor electrodes 3 and lead wires 4 are described as being formed on the second surface 2b side of substrate part 2, but the exemplary embodiment is not limiting. Specifically, sensor electrodes 3 and lead wires 4 may be formed on the first surface 2a side of substrate part 2.

Exemplary embodiments of the present disclosure have thus far described, but the present disclosure is not limited to only the above-described exemplary embodiments, and various changes can be made within the scope of the present disclosure.

### [OUTLINE]

Touch sensor 1 according to the present disclosure described above includes: substrate part 2 including first surface 2a and second surface 2b located opposite to first surface 2a; first hard coat layer 8 which is provided on first surface 2a of substrate part 2 and is light-transmissive; and decorative part 5 including first decorative layer 6 which is provided on first surface 2a of substrate part 2 and is tinted and less light-transmissive than first hard coat layer 8. First decorative layer 6 includes: first decorative surface 6a in contact with first surface 2a of substrate part 2; and second decorative surface 6b connected to first decorative surface 6a. First hard coat layer 8 includes: first coat surface 8a in contact with first surface 2a of substrate part 2; and second coat surface 8b connected to first coat surface 8b and facing second decorative surface 6b.

In touch sensor 1, second coat surface 8b is preferably in contact with second decorative surface 6b.

In touch sensor 1, when first direction D1 represents the direction viewed from second surface 2b to first surface 2a, first decorative layer 6 may be located in first direction D1 viewed from substrate part 2, first decorative layer 6 may further include third decorative surface 6c connected to first decorative surface 6a via second decorative surface 6c, first hard coat layer 8 may be located in first direction D1 viewed from substrate part 2, and first hard coat layer 8 may further include third coat surface 8c connected to second coat surface 8b and being in contact with third decorative surface 6c.

In touch sensor 1, first hard coat layer 8 preferably further includes fourth coat surface 8d located in first direction D1 viewed from first coat surface 8a and third coat surface 8c are, the distance (dimension A) between third coat surface 8c and fourth coat surface 8d in first direction D1 is preferably set smaller than the distance (dimension C) between first decorative surface 6a and third decorative surface 6c in first direction D1.

In touch sensor 1, decorative part 5 may further include second decorative layer 7 provided on substrate part 2, second decorative layer 7 may include: fourth decorative surface 7a in contact with first surface 2a of substrate part 2; fifth decorative surface 7b connected to fourth decorative surface 7a and facing second decorative surface 6b; and sixth decorative surface 7c which is located in first direction D1 viewed fromvie fourth decorative surface 7a is and connected to fifth decorative surface 7b, and first hard coat layer 8 may further include: fifth coat surface 8e connected to first coat surface 8a and contacting fifth decorative surface 7b; and sixth coat surface 8f connected to fifth coat surface 8e and being in contact with sixth decorative surface 7c.

In touch sensor 1, first hard coat layer 8 preferably has a degree of hardness in the range of B to 9H.

In touch sensor 1, fourth coat surface 8d in a second region (area α) located in first direction D1 viewed from a first region (area β) located between second decorative surface 6b and fifth decorative surface 7b preferably has a degree of surface roughness of between 0.05 pm and 1.1 µm, inclusive.

In touch sensor 1, fourth coat surface 8d in a second region (area α) located in first direction D1 viewed from a first region (area β) located between second decorative surface 6b and fifth decorative surface 7b may have a degree of surface roughness greater than 1.1 pm but less than or equal to 4.5 pm.

In touch sensor 1, fourth coat surface 8d in a second region (area α) located in first direction D 1 from a first region (area β) located between second decorative surface 6b and fifth decorative surface 7b preferably has a moth-eye structure.

In touch sensor 1, at least a portion of fourth coat surface 8d in a second region (area α) located in first direction D 1 viewed from a first region (area β) located between second decorative surface 6b and fifth decorative surface 7b is preferably provided so that the distance (dimension B1) between first coat surface 8a and fourth coat surface 8d in first direction D 1 is smaller than the distance (dimension B2) obtained by adding the distance (dimension A) between third coat surface 8c and fourth coat surface 8d in first direction D1 to the distance (dimension C) between first decorative surface 6a and third decorative surface 6c in first direction D1.

Touch sensor 1 preferably further includes second hard coat layer 9 provided on second surface 2b of substrate part 2, and second hard coat layer 9 preferably has a degree of hardness in the range of B to 9H.

In touch sensor 1, the degree of hardness of second hard coat layer 9 is preferably equal to the degree of hardness of first hard coat layer 8.

In touch sensor 1, first decorative layer 6 is preferably made from a resin material containing a color pigment.

In touch sensor 1, first hard coat layer 8 is preferably made from a transparent resin material.

### INDUSTRIAL APPLICABILITY

The touch sensor according to the present disclosure is industrially applicable as a sensor-type input device on which a touch operation is possible.

### REFERENCE MARKS IN THE DRAWINGS

- 1: touch sensor
- 2: substrate part
- 2a: first surface
- 2b: second surface
- 3: sensor electrode
- 4: lead wire
- 5: decorative part
- 6: first decorative layer
- 6a: first decorative surface
- 6b: second decorative surface
- 6c: third decorative surface
- 7: second decorative layer
- 7a: fourth decorative surface
- 7b: fifth decorative surface
- 7c: sixth decorative surface
- 8: first hard coat layer
- 8a: first coat surface
- 8b: second coat surface
- 8c: third coat surface
- 8d: fourth coat surface
- 8e: fifth coat surface
- 8f: sixth coat surface
- 9: second hard coat layer
- 10: flexible wiring board
- 11: light source body
- D1: first direction
- D2: second direction
- α: area (second region)
- β: area (first region)

## Claims

1. A touch sensor, comprising:
a substrate part including a first surface and a second surface located opposite to the first surface;
a first hard coat layer provided on the first surface of the substrate part, the first hard coat layer being light-transmissive; and
a decorative part including a first decorative layer provided on the first surface of the substrate part, the first decorative layer being tinted and less light-transmissive than the first hard coat layer, wherein
the first decorative layer includes:
a first decorative surface in contact with the first surface of the substrate part; and
a second decorative surface connected to the first decorative surface, and
the first hard coat layer includes:
a first coat surface in contact with the first surface of the substrate part; and
a second coat surface connected to the first coat surface and facing the second decorative surface.

2. The touch sensor according to claim 1, wherein
the second coat surface is in contact with the second decorative surface.

3. The touch sensor according to claim 2, wherein
when a first direction represents a direction viewed from the second surface to the first surface,
the first decorative layer is located in the first direction viewed from the substrate part,
the first decorative layer includes a third decorative surface connected to the first decorative surface via the second decorative surface,
the first hard coat layer is located in the first direction viewed from the substrate part, and
the first hard coat layer further includes a third coat surface connected to the second coat surface and being in contact with the third decorative surface.

4. The touch sensor according to claim 3, wherein
the first hard coat layer further includes a fourth coat surface located in the first direction viewed from the first coat surface and the third coat surface are, and
a first distance between the third coat surface and the fourth coat surface in the first direction is smaller than a second distance between the first decorative surface and the third decorative surface in the first direction.

5. The touch sensor according to claim 4, wherein
the decorative part further includes a second decorative layer provided on the substrate part,
the second decorative layer includes:
a fourth decorative surface in contact with the first surface of the substrate part;
a fifth decorative surface connected to the fourth decorative surface and facing the second decorative surface; and
a sixth decorative surface located in the first direction viewed from the fourth decorative surface is, the sixth decorative surface being connected to the fifth decorative surface, and
the first hard coat layer includes:
a fifth coat surface connected to the first coat surface and being in contact with the fifth decorative surface; and
a sixth coat surface connected to the fifth coat surface and being in contact with the sixth decorative surface.

6. The touch sensor according to claim 5, wherein
the first hard coat layer has a degree of hardness in a range of B to 9H.

7. The touch sensor according to claim 5 or 6, wherein
the fourth coat surface in a second region located in the first direction viewed from a first region located between the second decorative surface and the fifth decorative surface has a degree of surface roughness of between 0.05 pm and 1.1 pm, inclusive.

8. The touch sensor according to claim 5 or 6, wherein
the fourth coat surface in a second region located in the first direction viewed from a first region located between the second decorative surface and the fifth decorative surface has a degree of surface roughness greater than 1.1 pm but less than or equal to 4.5 pm.

9. The touch sensor according to claim 5 or 6, wherein
the fourth coat surface in a second region located in the first direction viewed from a first region located between the second decorative surface and the fifth decorative surface has a moth-eye structure.

10. The touch sensor according to claim 5 or 6, wherein
at least a portion of the fourth coat surface in a second region located in the first direction viewed from a first region located between the second decorative surface and the fifth decorative surface is provided so that a distance between the first coat surface and the fourth coat surface in the first direction is smaller than a distance obtained by adding the first distance between the third coat surface and the fourth coat surface in the first direction to the second distance between the first decorative surface and the third decorative surface in the first direction.

11. The touch sensor according to claim 6, further comprising:
a second hard coat layer provided on the second surface of the substrate part, wherein
the second hard coat layer has a degree of hardness in the range of B to 9H.

12. The touch sensor according to claim 11, wherein
the degree of hardness of the second hard coat layer is equal to the degree of hardness of the first hard coat layer.

13. The touch sensor according to any one of claims 1 to 12, wherein
the first decorative layer is made from a resin material containing a color pigment.

14. The touch sensor according to any one of claims 1 to 13, wherein
the first hard coat layer is made from a transparent resin material.
